# EUROPÄISCHE PATENTSCHRIFT

(11) **EP 2 142 027 B1**
(45) Veröffentlichungstag und Bekanntmachung des Hinweises auf die Patenterteilung: **08.11.2017**
(21) Anmeldenummer: 08748974.6
(22) Anmeldetag: 17.04.2008
(51) Int. Cl.: A43B 5/00, A43B 5/02, A43B 13/22, A43C 15/16, B29D 35/12

(54) **VERFAHREN ZUM HERSTELLEN EINER STOLLENSOHLE**
METHOD FOR PRODUCING A CLEAT SOLE
PROCÉDÉ DE FABRICATION D'UNE SEMELLE À CRAMPON(S)

(30) Priorität: 24.04.2007 DE 102007019270
(43) Veröffentlichungstag der Anmeldung: 13.01.2010
(73) Patentinhaber: PUMA SE, 91074 Herzogenaurach (DE)
(72) Erfinder: SUSSMANN, Reinhold, 91443 Scheinfeld (DE); SCHMID, Peter, Central Hongkong (CN)
(74) Vertreter: Gosdin, Michael
(86) Internationale Anmeldenummer: PCT/EP2008/003111
(87) Internationale Veröffentlichungsnummer: WO 2008/128712

(56) Entgegenhaltungen:
- EP-A- 0 039 268
- EP-A- 1 591 031
- DE-A1- 3 032 268
- US-A- 3 609 889
- US-A- 3 925 529

## Beschreibung

Die Erfindung betrifft ein Verfahren zum Herstellen einer mit mindestens einem Stollen versehenen Sohle, der an der Unterseite der Sohle angeordnet ist.

Stollenschuhe sind im Stand der Technik hinlänglich bekannt. Dabei kommen nicht nur rotationssymmetrische Stollen zum Einsatz, wie es dem üblichen Anwendungsfall entspricht. Die an der Unterseite der Schuhsohle befestigten Stollen können vielmehr auch asymmetrische Formen aufweisen.

Die WO 00/15068 A1 zeigt Stollen, die auf der Unterseite einer Schuhsohle verankert sind, wobei die Stollen in der vertikalen Projektion unter anderem etwa dreieckförmig ausgebildet sind. Die FR 2 818 876 A1 zeigt Stollen, die eine längliche Form aufweisen.

Die Stollen erstrecken sich dabei zumeist mit ihrer Längsachse in vertikale Richtung, d. h. normal auf die Sohlenoberfläche.

Die DE 30 32 268 A1 zeigt Stollen, die auch (im Randbereich der Sohle) schräg angeordnet sind, d. h. zur Seite weisen. Eine ähnliche Lösung zeigt die DE 28 28 561 A1**.** US 3609889 zeigt ein Verfahren zum Herstellen einer Stollensohle, wobei ein Halteteil verwendet wird. Für manche Anwendungsfälle ist es wünschenswert, dass zwar die grundsätzliche Wirkung eines Stollenschuhs erhalten bleibt, dass jedoch bezüglich eines seitlichen Abrutschens des Fußes auf dem Boden in eine definierte Richtung ein spezieller Widerstand entgegengesetzt wird. Ein typisches Anwendungsbeispiel ist ein Golfschuh, der aufgrund der Kinetik beim Schlag mit einem Golfschläger eine besondere Griffigkeit am Boden und insbesondere auf Rasen haben muss.

Sofern die Asymmetrie des Stollens ein gewisses Maß überschreitet, kann es zu Problemen bei der Herstellung des Schuhs bzw. dessen Stollensohle kommen. Da die Sohle meist im Spritzgießverfahren produziert wird, empfiehlt sich das Umspritzen von Stollen, die als Vorformteile in das Spritzgießwerkzeug eingelegt werden. Problematisch ist dabei, dass das Entformen der gespritzten Sohle samt Stollen schwierig sein kann, falls die Stollen Hinterschnitte bezüglich der Öffnung- und Schließrichtung des Spritzgießwerkzeugs aufweisen.

Zwar kann mit aufwändiger Werkzeugtechnik (Schieber im Spritzgießwerkzeug) diesem Problem begegnet werden, allerdings ist der hierfür zu treibende Aufwand sehr hoch.

Gänzlich versagt auch dieses Verfahren, wenn die Stollen in unterschiedlichen Richtungen an der Sohle angeordnet sind, so dass es keine einheitliche hinterschnittsfreie Entformrichtung für alle Stollen gibt. Diese Probleme verstärken sich also noch, wenn es gewünscht wird, eine Stollensohle mit einer Vielzahl von Stollen auszustatten, die jeweils in einer individuellen Ausrichtung asymmetrisch an der Sohle angeordnet sein sollen. Der Erfindung liegt daher die **Aufgabe** zugrunde, ein Verfahren der Eingangs genannten Art so fortzubilden, dass es möglich wird, in fertigungstechnisch einfacher Weise eine Stollensohle mit beliebig geformten Stollen herzustellen, wobei die Ausrichtung der Stollen frei wählbar sein soll. Gegebenenfalls soll es auch in einfacher Weise möglich sein, die Orientierung einzelner Stollen zu verändern, ohne dass dies nennenswerte Fertigungsprobleme nach sich zieht. Das erfindungsgemäße Verfahren soll sich ferner durch eine kostengünstige Möglichkeit der Realisierung auszeichnen. Damit soll es möglich werden, einen Schuh, insbesondere einen Golfschuh herzustellen, der sich durch eine verbesserte Griffigkeit am Boden auszeichnet, wobei der speziellen Kinetik beim Golfspiel Rechnung getragen werden soll. Die hier auftretenden Kräfte sollen gezielt in die benötigten Richtungen übertragen werden können, um dem Fuß des Golfspielers einen optimalen Halt am Boden zu bieten.

Die **Lösung** dieser Aufgabe durch die Erfindung ist dadurch gekennzeichnet, dass das Verfahren die Schritte aufweist:
a) Herstellen mindestens eines Stollens, wobei der Stollen einen mit der Sohle verbindbaren Stollengrundkörper aufweist, wobei am Stollengrundkörper mindestens ein sich bei bestimmungsgemäßen Gebrauch in Richtung Boden erstreckender Fortsatz angeordnet ist und wobei die vertikale Projektionsfläche des dem Boden zugewandten Endes des Fortsatzes zumindest teilweise, vorzugsweise vollständig außerhalb der vertikalen Projektionsfläche des Stollengrundkörpers liegt;
b) Einsetzen des Stollens in ein Halteteil, wobei das Halteteil einen formkongruenten Aufnahmeraum für zumindest einen Teil des Stollengrundkörpers und für den Fortsatz aufweist;
c) Platzieren des Stollens samt Halteteil in einer Ausnehmung in einem mindestens zweiteiligen Spritzgießwerkzeug, so dass ein Teil des Stollens in die zwischen den Teilen des Spritzgießwerkzeugs gebildete Kavität hineinragt;
d) Spritzgießen zumindest eines Teils der Sohle, vorzugsweise die gesamte Sohle, durch Einspritzen von Kunststoffschmelze in die Kavität des Spritzgießwerkzeugs, so dass ein Teil des Stollens von der Kunststoffschmelze umspritzt wird;
e) Entformen der spritzgegossenen Sohle samt angespritztem Stollen und Halteteil;
f) Entfernen des Halteteils vom Stollen.

Mit dieser Vorgehensweise wird es - wie noch im Einzelnen zu sehen sein wird - möglich, in sehr kostengünstiger Weise Stollen an einer spritzzugießenden Sohle anzuformen, die mit Hinterschnitten bezogen auf die Öffnungsrichtung des Spritzgießwerkzeugs versehen sind. Die Entformung der Sohle mit den angespritzten Stollen ist problemlos möglich.

Das Halteteil ist bevorzugt in seiner in die Ausnehmung im Spritzgießwerkzeug eingesetzten Position in Öffnung- und Schließrichtung des Spritzgießwerkzeugs hinterschnittsfrei ausgebildet. Insbesondere ist vorgesehen, dass das Halteteil eine zylindrische Form hat, wobei das Halteteil so in die Ausnehmung im Spritzgießwerkzeug eingesetzt ist, dass die Achse des Zylinders in Öffnung- und Schließrichtung des Spritzgießwerkzeugs weist.

Vor dem Spritzgießen der Sohle gemäß obigem Schritt d) kann ein flächig ausgebildetes Verstärkungsteil in die Kavität des Spritzgießwerkzeugs eingelegt werden. Dabei handelt es sich bei dem Verstärkungsteil bevorzugt um ein solches mit Glasfasern oder Kohlenstofffasern.

Besonders bevorzugt werden mindestens zwei Stollen an der Sohle angeordnet, wobei mindestens zwei Fortsätze zweier Stollen in unterschiedliche Richtungen ausgerichtet sind.

Beim Spritzgießen der Sohle gemäß obigem Schritt d) kann eine Anzahl am Stollengrundkörper angeordnete Verankerungselemente vom Material der Sohle umspritzt werden.

Um ein gutes Lösen des Halteteils nach dem Spritzgießen zu gewährleisten, kann dieses aus Polyamid (Handelsname Nylon) hergestellt sein.

Der Stollen selber kann als Zwei-Komponenten-Kunststoffteil hergestellt sein. Es kann zumindest teilweise aus thermoplastischem Elastomer auf Urethanbasis (TPU) bestehen.

Am Stollengrundkörper ist also mindestens ein Fortsatz angeordnet, der sich in Richtung Boden erstreckt, wobei der Fortsatz mit seinem dem Boden zugewandten Ende die vertikale Projektionsfläche des Stollengrundkörpers verlässt. Der Stollen zeichnet sich also dadurch aus, dass neben dem eigentlichen Stollengrundkörper ein Fortsatz mit definierte Ausrichtung vorgesehen ist, der aus der vertikalen Projektionsfläche des Stollengrundkörpers heraustritt, wodurch sich ein besonders guter seitlich gerichteter Halt des Stollens am Boden ergibt.

Der Fortsatz weist dabei bevorzugt eine längliche Form mit einer Längsachse auf. Die Längsachse des Fortsatzes schließt zur vertikalen Richtung bevorzugt einen Winkel zwischen 20° und 60° ein, besonders bevorzugt einen Winkel zwischen 30° und 50°.

Der Fortsatz kann in einem Schnitt senkrecht zu seiner Längsachse zumindest abschnittsweise eine im Wesentlichen rechteckige Form haben.

Der Stollengrundkörper und der mindestens eine Fortsatz sind bevorzugt als einstückiges Spritzgießteil ausgebildet. Der Stollengrundkörper und der mindestens eine Fortsatz bestehen dabei bevorzugt aus thermoplastischem Elastomer auf Urethanbasis (TPU).

Die Form des Stollengrundkörpers ist bevorzugt diejenige einer Halbkugel. Damit der Stollen gut in der Sohle befestigbar ist, sieht eine weitere Ausgestaltung der Erfindung vor, dass der Stollengrundkörper Verankerungselemente zur Verankerung in der Sohle aufweist. Diese können als sich in vertikale Richtung erstreckende Zylinder ausgebildet sein, die vom Material der Sohle umspritzt sind. Bevorzugt ist eine Anzahl Zylinder um den Umfang des der Sohle zugewandten Endes des Stollengrundkörpers angeordnet. Bevorzugt ist weiterhin vorgesehen, dass die Verankerungselemente an einer Scheibe angeordnet sind, die wiederum mit dem Stollengrundkörper verbunden ist.

Die Sohle des Schuhs hat mindestens einen derartigen Stollen. Dabei ist bevorzugt vorgesehen, dass mindestens zwei Stollen auf der Sohle angeordnet sind, wobei die Fortsätze der mindestens zwei Stollen in mindestens zwei unterschiedliche Richtungen weisen.

Die Erfindung kommt mit besonderem Vorteil bei der Herstellung eines Golfschuhs zum Einsatz.

In der Zeichnung ist ein Ausführungsbeispiel der Erfindung dargestellt. Es zeigen:
- Fig. 1: die Seitenansicht eines Stollens, der in einer Sohle verankert ist,
- Fig. 2: in perspektivischer Darstellung den Stollen gemäß Fig. 1,
- Fig. 3: den Schnitt A-B gemäß Fig. 1,
- Fig. 4: die Draufsicht auf die Unterseite einer Sohle eines Golfschuhs, die mit einer Vielzahl von Stollen versehen ist,
- Fig. 5: den Stollen nach seiner Herstellung und vor dem Verbinden mit der Sohle,
- Fig. 6: den Stollen, wie er in einem Halteteil aufgenommen ist,
- Fig. 7: einen Ausschnitt eines zweitteiligen Spritzgießwerkzeugs mit gespritzter Sohle, wobei eine Anzahl Halteteile samt Stollen in Ausnehmungen im Spritzgießwerkzeug eingesetzt sind und
- Fig. 8: einen Ausschnitt der entformten fertigen Sohle, von der die Halteteile entfernt werden.

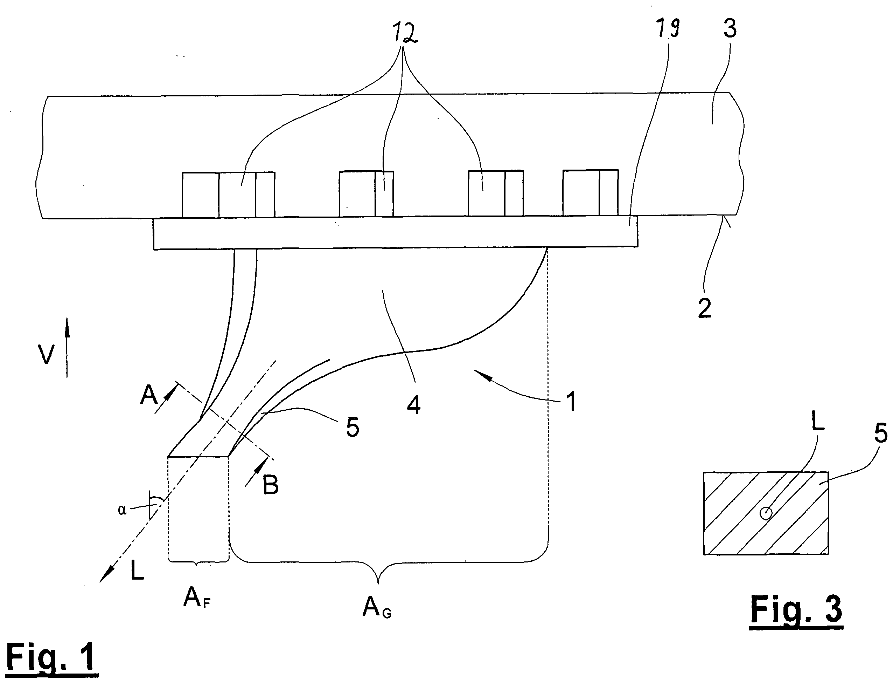

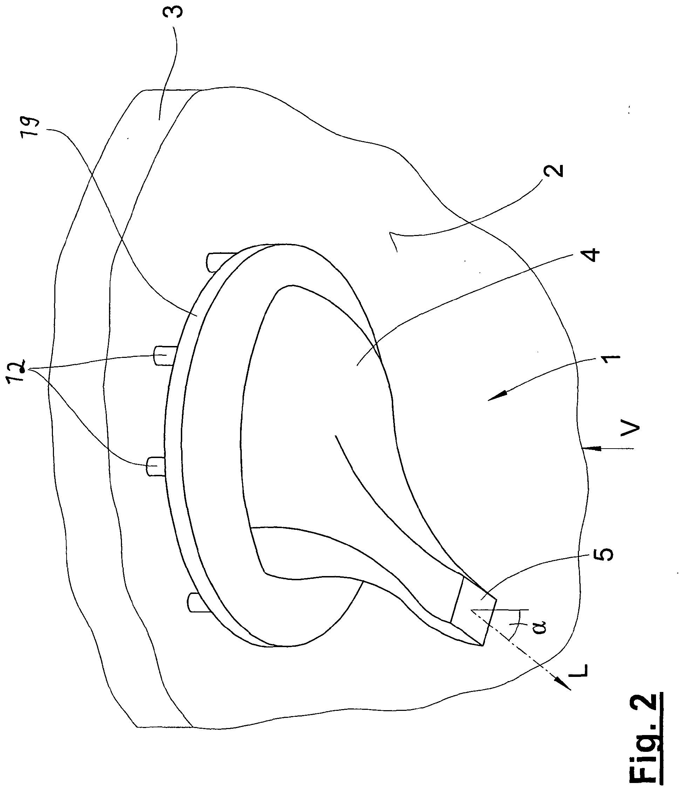

In den Figuren 1 und 2 ist ein Stollen 1 dargestellt, der auf der Unterseite 2 einer Sohle 3 eines Schuhs verankert ist. Der Stollen 1 weist einen Stollengrundkörper 4 auf, der im Wesentlichen die Form einer Halbkugel hat. Betrachtet man den Stollengrundkörper 4 - s. Fig. 1 - kann festgestellt werden, dass er eine Projektionsfläche A_{G} definiert, die aus vertikaler Richtung V betrachtet ersichtlich ist; diese ist im Ausführungsbeispiel kreisförmig.

Die sichere Verankerung des Stollens 1 in der Sohle 3 erfolgt durch eine Anzahl Verankerungselemente 12. Diese sind im Wesentlichen als zylindrische Stifte ausgeführt, die in vertikale Richtung V weisen und beim Herstellen des Schuhs bzw. der Sohle im Spritzgießverfahren - wie noch im Detail zu sehen sein wird - umspritzt werden. Eine saubere Anlage des Stollens 1 auf der Sohle 3 wird durch eine Scheibe 19 erreicht, die die Verankerungselemente 12 trägt und ihrerseits mit dem Stollengrundkörper 4 verbunden ist. Der Stollengrundkörper 4, die Scheibe 19 und die Verankerungselemente 12 sind als einstückiges Teil ausgeführt.

Beachtlich ist, dass am Stollengrundkörper 4 mindestens ein Fortsatz 5 angeordnet ist, der sich in Richtung Boden erstreckt. Dabei verlässt - wie es am besten aus Fig. 1 hervorgeht - der Fortsatz 5 mit seinem dem Boden zugewandten Ende die vertikale Projektionsfläche A_{G} des Stollengrundkörpers 4. D. h. die (im Ausführungsbeispiel rechteckförmige) vertikale Projektionsfläche A_{F} des dem Boden zugewandten Endes des Fortsatzes 5 liegt zumindest teilweise, vorzugsweise vollständig (wie im Ausführungsbeispiel), außerhalb der vertikalen Projektionsfläche A_{G} des Stollengrundkörpers 4.

Der Fortsatz 5 ist dabei stabförmig ausgeführt, so dass eine Längsachse L definierbar ist, entlang derer sich der Fortsatz 5 erstreckt. Diese Längsachse L schließt mit der vertikalen Richtung einen Winkel α ein, der im Ausführungsbeispiel bei ca. 40° liegt.

Wie in Fig. 3 gesehen werden kann, hat der Fortsatz dabei im Wesentlichen eine rechteckige Querschnittsform (s. Schnitt A-B gemäß Fig. 1).

Mit der vorgeschlagenen Ausgestaltung des Stollens wird es möglich, zusätzlich zum bekannten Stolleneffekt - hervorgerufen durch den Stollengrundkörper 4 - einen gezielten seitlichen Halt des Stollens 1 am Boden zu erreichen, was durch den Fortsatz 5 bewerkstelligt wird.

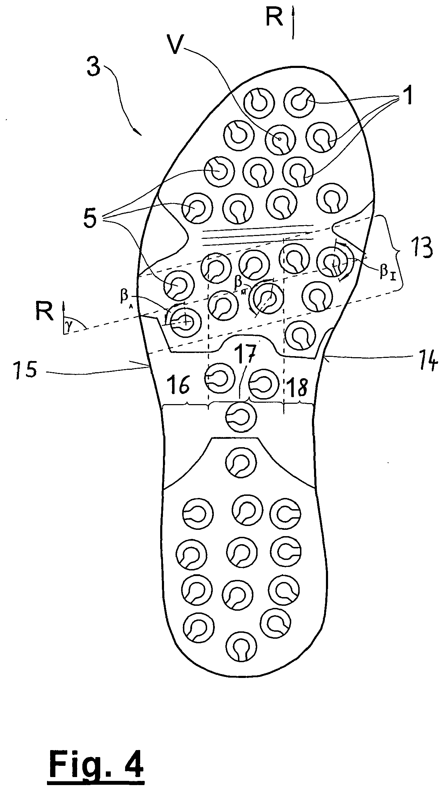

Eine mögliche diesbezügliche Ausgestaltung ist für einen Golfschuh in Fig. 4 illustriert. Hier ist die Sohle 3 des Golfschuhs von unten zu sehen, auf der eine Anzahl Stollen 1 befestigt sind.

Ein jeder Stollen 1 hat einen Fortsatz 5, der sich in der in Fig. 1 gezeigten Weise erstreckt. Die Projektion auf den Boden liefert die Ausrichtung des Fortsatzes 5, die in Fig. 4 zu erkennen ist. Es ist zu sehen, dass die Fortsätze 5 in unterschiedlicher Weise ausgerichtet sind, d. h. nach verschiedenen Seiten weisen. Namentlich ist zu sehen, dass sich ein Winkel β definieren lässt, die der Fortsatz 5 in seiner Projektion auf den Boden zur Schuhlängsachse R einschließt. Dies ist für den mittleren Sohlenbereich in Fig. 4 für drei Stollen 1 eingetragen.

Im Ausführungsbeispiel gemäß Fig. 4 ist vorgesehen, dass zumindest einer der Schuhe eines Schuhpaares entlang eines gedachten Bandes 13, das sich über die Breite der Sohle 3 von der Sohleninnenseite 14 bis zur Sohlenaußenseite 15 erstreckt, mit Stollenelementen 1 versehen ist.

Deren Fortsatz 5 im Sohlenaußenbereich 16 ist unter einem Winkel β_{A} zwischen 60° und 135° zur Schuhlängsachse R seitlich nach außen ausgerichtet. Im Sohlenmittenbereich 17 ist der Fortsatz 5 unter einem Winkel β_{M} zwischen 135° und 225° zur Schuhlängsachse R nach hinten ausgerichtet. Im Sohleninnenbereich 18 schließlich ist der Fortsatz 5 unter einem Winkel β_{I} zwischen 90° und 180° zur Schuhlängsachse R seitlich nach innen ausgerichtet.

Das gedachte Band 13 erstreckt sich dabei von der Sohlenaußenseite 15 unter einem Winkel γ zwischen 30° und 90°, vorzugsweise zwischen 40° und 50°, zur Schuhlängsachse R in Richtung Sohleninnenseite 14. Weiterhin setzt das gedachte Band 13 an der Sohlenaußenseite 15 etwa mittig zwischen dem vorderen und hinteren Ende der Sohle 3 an. Wie zu sehen ist, sind entlang des gedachten Bandes 13 vier bis fünf Stollen 1 seitlich nebeneinander angeordnet.

Die Ausrichtung der Stollen 1 in der erläuterten Weise hat den Vorteil, dass die aufgrund der Kinetik beim Schlagen eines Golfballs auftretenden Kräfte, die über den Schuh auf den Boden zu übertragen sind, in optimaler Weise weitergeleitet werden. Dadurch ist insbesondere beim Golfspielen ein verbesserter Halt des Schuhs am Boden gegeben.

Die Ausrichtung der Stollen 1 in der erläuterten Weise trägt dem Umstand Rechnung, dass beim Schlagen eines Balles mit einem Golfschläger über den Verlauf des Schlages Kräfte in unterschiedlicher Weise vom Golfschläger über den Spieler und dessen Beine auf den Boden übertragen werden müssen. Bei der Ausrichtung der Stollen 1 mit ihren Fortsätzen 5 insbesondere innerhalb des gedachten Bandes 13 werden diesbezüglich optimale Ergebnisse erreicht.

In den Ausführungsbeispielen ist jeweils nur ein einziger Fortsatz 5 am Stollengrundkörper 4 angeordnet. Es können jedoch auch zwei oder drei Fortsätze 5 vorgesehen werden, die sich dann sternförmig nach einer seitlichen Richtung des Stollens 1 erstrecken.

Die beiden Sohlen eines Schuhpaares müssen dabei nicht zwangsläufig gespiegelt mit Stollen 1 versehen sein. Es kann sich als sinnvoll erweisen, dass die beiden Schuhe in unterschiedlicher Weise mit Stollen ausgestattet sind.

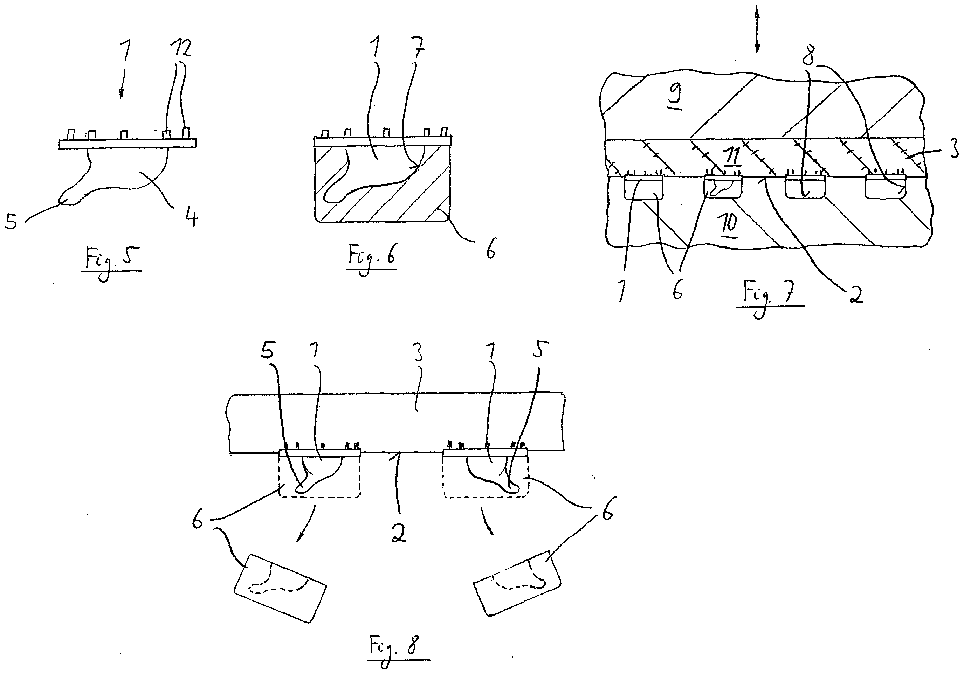

Um eine fertigungstechnisch vorteilhafte Produktion zu ermöglichen, sieht die Erfindung ein Verfahren vor, das in den Figuren 5 bis 8 beispielhaft illustriert ist.

In Figur 5 ist zunächst der vorgefertigte Stollen 1 zu sehen, der beispielsweise als Zwei-Komponenten-Spritzgießteil ausgeführt sein kann. Angeformt sind auch - wie erwähnt- die Verankerungselemente 12 in Form zylindrischer Stifte.

Im nächsten Verfahrensschritt wird gemäß Fig. 6 der Stollen 1 in ein Halteteil 6 eingesetzt. Das Halteteil 6 weist einen Aufnahmeraum 7 auf, der formkongruent zur Oberfläche des Stollens 1 ausgeführt ist. D. h. der Stollen 1 passt genau in den Aufnahmeraum 7.

Gemäß dem nächsten Verfahrensschritt, der in Fig. 7 dargestellt ist, werden die Stollen 1 samt ihren jeweiligen Halteteilen 6 in Ausnehmungen 8 eingesetzt, die in die eine Hälfte 10 eines zweiteiligen Spritzgießwerkzeugs 9, 10 eingearbeitet sind. In bekannter Weise bilden die beiden Werkzeugteile 9, 10 zusammen eine Kavität 11, die mit Schmelze befüllt wird, um das gewünschte Spritzgießformteil herzustellen, hier also die Sohle 3.

Wie in Fig. 7 weiter gesehen werden kann, ragt ein Endbereich des Stollens 1, nämlich derjenige mit den Verankerungselementen 12, in die Kavität 11 des Werkzeugs 9, 10 hinein, so dass dieser Bereich beim Einspritzen von Schmelze in die Kavität 11 umspritzt wird.

Die Ausnehmungen 8 sind hier zylindrisch ausgebildet und entsprechen der zylindrischen Form der Halteteile 6. Dies hat zur Folge, dass beim Öffnen und Schließen des Spritzgießwerkzeugs 9, 10 in Richtung des Doppelpfeils in Fig. 7 eine hinterschnittsfreie Entformung der Halteteile 6 möglich ist.

Werden die beiden Hälften des Spritzgießwerkzeugs 9, 10 geöffnet und das Spritzgießteil entnommen, ergibt sich eine Konfiguration, wie sie in Fig. 8 zu sehen ist, und zwar mit den Halteteilen 6 in der gestrichelten Darstellung. Durch die hinterschnittsfreie Ausführung der Halteteile 6 kommt es problemlos zur Entformung der Halteteil 6. Liegt die Sohle 3 samt Stollen 1 und Halteteilen 6 dann entformt vor, können die Halteteile 6 durch seitliches Schwenken (s. Pfeile in Fig. 8) abgenommen und die Stollen 1 damit freigelegt werden.

Die fertige Sohle 3 liegt dann zur weiteren Verwendung vor.

Ein Vorteil des vorgeschlagenen Verfahrens besteht darin, dass problemlos Stollen mit Hinterschnitt in Entformungsrichtung des Werkzeugs an der Sohe angespritzt werden können, ohne in Fertigungsprobleme zu geraten. Die Halteteile 6 eröffnen die Möglichkeit, dennoch eine einfache Fertigung ohne Schieber im Werkzeug etc. zu bewerkstelligen.

Es ist in vorteilhafter Weise weiterhin problemlos möglich, die einzelnen Stollen 1 in beliebiger Ausrichtung relativ zueinander zu platzieren, ohne dass irgendwelche Entformungsprobleme entstehen. Es ist insbesondere leicht möglich, die Ausrichtung der einzelnen Stollen in kostengünstiger Weise zu verändern, sofern dies gewünscht wird. Es sind hierfür keine kostenintensiven Werkzeugänderungen erforderlich. Genauso leicht ist es möglich, die Stollenform zu verändern, indem andere Halteteile eingesetzt werden.

Die Halteteile 6 bestehen bevorzugt aus einem Material wie Polyamid (Nylon), das sich gut lösen lässt. Damit kann ein Halteteil 6 mehrmals benutzt werden.

### Bezugszeichenliste:

- 1: Stollen
- 2: Unterseite
- 3: Sohle
- 4: Stollengrundkörper
- 5: Fortsatz
- 6: Halteteil
- 7: formkongruenter Aufnahmeraum
- 8: Ausnehmung
- 9: Teil des Spritzgießwerkzeugs
- 10: Teil des Spritzgießwerkzeugs
- 11: Kavität
- 12: Verankerungselement
- 13: gedachtes Band
- 14: Sohleninnenseite
- 15: Sohlenaußenseite
- 16: Sohlenaußenbereich
- 17: Sohlenmittenbereich
- 18: Sohleninnenbereich
- 19: Scheibe

- A_{G}: vertikale Projektionsfläche des Stollengrundkörpers
- A_{F}: vertikale Projektionsfläche des Endes des Fortsatzes
- L: Längsachse
- α: Winkel
- V: vertikale Richtung
- R: Schuhlängsachse
- β_{A}: Winkel
- β_{M}: Winkel
- β_{I}: Winkel
- γ: Winkel

## Patentansprüche

1. Verfahren zum Herstellen einer mit mindestens einem Stollen (1) versehenen Sohle (3), der an der Unterseite (2) der Sohle (3) angeordnet ist, wobei das Verfahren die Schritte aufweist:
a) Herstellen mindestens eines Stollens (1), wobei der Stollen (1) einen mit der Sohle (3) verbindbaren Stollengrundkörper (4) aufweist, wobei am Stollengrundkörper (4) mindestens ein sich bei bestimmungsgemäßen Gebrauch in Richtung Boden erstreckender Fortsatz (5) angeordnet ist und wobei die vertikale Projektionsfläche (A_{F}) des dem Boden zugewandten Endes des Fortsatzes (5) zumindest teilweise, vorzugsweise vollständig außerhalb der vertikalen Projektionsfläche (A_{G}) des Stollengrundkörpers (4) liegt;
b) Einsetzen des Stollens (1) in ein Halteteil (6), wobei das Halteteil (6) einen formkongruenten Aufnahmeraum (7) für zumindest einen Teil des Stollengrundkörpers (4) und für den Fortsatz (5) aufweist;
c) Platzieren des Stollens (1) samt Halteteil (6) in einer Ausnehmung (8) in einem mindestens zweiteiligen Spritzgießwerkzeug (9, 10), so dass ein Teil des Stollens (1) in die zwischen den Teilen des Spritzgießwerkzeugs gebildete Kavität (11) hineinragt;
d) Spritzgießen zumindest eines Teils der Sohle (3), vorzugsweise die gesamte Sohle, durch Einspritzen von Kunststoffschmelze in die Kavität (11) des Spritzgießwerkzeugs (9, 10), so dass ein Teil des Stollens (1) von der Kunststoffschmelze umspritzt wird;
e) Entformen der spritzgegossenen Sohle (3) samt angespritztem Stollen (1) und Halteteil (6);
f) Entfernen des Halteteils (6) vom Stollen (1).

2. Verfahren nach Anspruch 1, **dadurch gekennzeichnet, dass** das Halteteil (6) in seiner in die Ausnehmung (8) im Spritzgießwerkzeug (9, 10) eingesetzten Position in Öffnung- und Schließrichtung des Spritzgießwerkzeugs (9, 10) hinterschnittsfrei ausgebildet ist.

3. Verfahren nach Anspruch 2, **dadurch gekennzeichnet, dass** das Halteteil (6) eine zylindrische Form hat, wobei das Halteteil (6) so in die Ausnehmung (8) im Spritzgießwerkzeug (9, 10) eingesetzt ist, dass die Achse des Zylinders in Öffnung- und Schließrichtung des Spritzgießwerkzeugs (9, 10) weist.

4. Verfahren nach einem der Ansprüche 1 bis 3, **dadurch gekennzeichnet, dass** vor dem Spritzgießen der Sohle (3) gemäß Schritt d) nach Anspruch 1 ein flächig ausgebildetes Verstärkungsteil in die Kavität (11) des Spritzgießwerkzeugs (9, 10) eingelegt wird.

5. Verfahren nach Anspruch 4, **dadurch gekennzeichnet, dass** das Verstärkungsteil Glasfasern oder Kohlenstofffasern aufweist.

6. Verfahren nach einem der Ansprüche 1 bis 5, **dadurch gekennzeichnet, dass** mindestens zwei Stollen (1) an der Sohle (3) angeordnet werden, wobei mindestens zwei Fortsätze (5) zweier Stollen (1) in unterschiedliche Richtungen ausgerichtet sind.

7. Verfahren nach einem der Ansprüche 1 bis 6, **dadurch gekennzeichnet, dass** beim Spritzgießen der Sohle (3) gemäß Schritt d) nach Anspruch 1 eine Anzahl am Stollengrundkörper (4) angeordnete Verankerungselemente (12) vom Material der Sohle (3) umspritzt werden.

8. Verfahren nach einem der Ansprüche 1 bis 7, **dadurch gekennzeichnet, dass** das Halteteil (6) aus Polyamid hergestellt ist.

9. Verfahren nach einem der Ansprüche 1 bis 8, **dadurch gekennzeichnet, dass** der Stollen (1) als Zwei-Komponenten-Kunststoffteil hergestellt ist.

10. Verfahren nach einem der Ansprüche 1 bis 9, **dadurch gekennzeichnet, dass** der Stollen (1) zumindest teilweise aus thermoplastischem Elastomer auf Urethanbasis (TPU) besteht.

## Claims

1. Method for the production of a sole (3) having at least one cleat (1), wherein the cleat (1) is arranged at the bottom side (2) of the sole (3), wherein the method comprises the steps:
a) Production of at least on cleat (1), wherein the cleat (1) has a cleat base body (4) which can be connected with the sole (3), wherein at least one extension (5) is arranged at the cleat base body (4) which extents toward the ground during intended use and wherein the vertical projected area (A_{F}) of the end of the extension (5) which is facing the ground is arranged at least partially, preferably completely, outside of the vertical projected area (A_{G}) of the cleat base body (4);
b) Inserting of the cleat (1) in a holding part (6), wherein the holding part (6) has a congruent receiving space (7) for at least a part of the cleat base body (4) and for the extension (5);
c) Placing of the cleat (1) together with the holding part (6) in a recess (8) in an at least two-part injection moulding tool (9, 10), so that a part of the cleat (1) projects into the cavity (11) which is formed between the parts of the injection moulding tool;
d) Injection moulding of at least a part of the sole (3), preferably of the complete sole, by injecting of plastic melt into the cavity (11) of the injection moulding tool (9, 10), so that a part of the cleat (1) is coated by the plastic melt;
e) Demoulding of the injection-moulded sole (3) together with the coated cleat (1) and the holding part (6);
f) Removing of the holding part (6) from the cleat (1).

2. Method according to claim 1, **characterized in that** the holding part (6) is designed undercut-free in open and closing direction of the injection moulding tool (9, 10) when being inserted in its position in the recess (8) in the injection moulding tool (9, 10).

3. Method according to claim 2, **characterized in that** the holding part (6) has a cylindrical shape, wherein the holding part (6) is inserted into the recess (8) in the injection moulding tool (9, 10) in such a way that the axis of the cylinder is directed in open and closing direction of the injection moulding tool (9, 10).

4. Method according to one of claims 1 till 3, **characterized in that** before the injection moulding of the sole (3) takes place according to step d) of claim 1 a laminar shaped reinforcing part is inserted in the cavity (11) of the injection moulding tool (9, 10).

5. Method according to claim 4, **characterized in that** the reinforcing part comprises glass fibre or carbon fibre.

6. Method according to one of claims 1 till 5, **characterized in that** at least two cleats (1) are arranged at the sole (3), wherein at least two extensions (5) of two cleats (1) are directed in different directions.

7. Method according to one of claims 1 till 6, **characterized in that** during injection moulding of the sole (3) according to step d) of claim 1 a plurality of anchor elements (12) which are arranged at the cleat base body (4) is coated with material of the sole (3).

8. Method according to one of claims 1 till 7, **characterized in that** the holding part (6) is produced from polyamide.

9. Method according to one of claims 1 till 8, **characterized in that** the cleat (1) is produced as a two-component plastic part.

10. Method according to one of claims 1 till 9, **characterized in that** the cleat (1) consists at least partially of thermoplastic elastomere material on a urethane basis (TPU).

## Revendications

1. Procédé de fabrication d'une semelle (3) pourvue d'au moins un crampon (1) qui est disposé sur le côté inférieur (2) de la semelle (3),
le procédé présentant les étapes suivantes :
a) fabrication d'au moins un crampon (1), le crampon (1) présentant un corps de base de crampon (4) pouvant être raccordé à la semelle (3), au moins une saillie (5), s'étendant dans la direction du sol lors d'une utilisation conforme, étant disposée au niveau du corps de base de crampon (4) et la surface en projection verticale (A_{F}) de l'extrémité de la saillie (5) tournée vers le sol étant située au moins en partie, de préférence complètement, à l'extérieur de la surface en projection verticale (A_{G}) du corps de base de crampon (4) ;
b) insertion du crampon (1) dans une partie de fixation (6), la partie de fixation (6) présentant un espace de réception (7) de forme correspondante pour au moins une partie du corps de base de crampon (4) et pour la saillie (5) ;
c) positionnement du crampon (1) conjointement avec la partie de fixation (6) dans un évidement (8) dans un outil de moulage par injection au moins en deux parties (9, 10), de telle sorte qu'une partie du crampon (1) pénètre dans la cavité (11) formée entre les parties de l'outil de moulage par injection ;
d) moulage par injection d'au moins une partie de la semelle (3), de préférence l'ensemble de la semaine, par injection de plastique en fusion dans la cavité (11) de l'outil de moulage par injection (9, 10) de telle sorte qu'une partie du crampon (1) soit surmoulée par le plastique en fusion ;
e) démoulage de la semelle moulée par injection (3) conjointement avec le crampon (1) surmoulé et la partie de fixation (6) ;
f) enlèvement de la partie de fixation (6) du crampon (1).

2. Procédé selon la revendication 1, **caractérisé en ce que** la partie de fixation (6) est réalisée sans contre-dépouille dans sa position insérée dans l'évidement (8) dans l'outil de moulage par injection (9, 10) dans la direction d'ouverture et de fermeture de l'outil de moulage par injection (9, 10).

3. Procédé selon la revendication 2, **caractérisé en ce que** la partie de fixation (6) présente une forme cylindrique, la partie de fixation (6) étant insérée dans l'évidement (8) dans l'outil de moulage par injection (9, 10) de telle sorte que l'axe du cylindre soit tourné dans la direction d'ouverture et de fermeture de l'outil de moulage par injection (9, 10).

4. Procédé selon l'une quelconque des revendications 1 à 3, **caractérisé en ce qu'**avant le moulage par injection de la semelle (3) conformément à l'étape d) selon la revendication 1, une pièce de renforcement réalisée sous forme plate est introduite dans la cavité (11) de l'outil de moulage par injection (9, 10).

5. Procédé selon la revendication 4, **caractérisé en ce que** la pièce de renforcement présente des fibres de verre ou des fibres de carbone.

6. Procédé selon l'une quelconque des revendications 1 à 5, **caractérisé en ce qu'**au moins deux crampons (1) sont disposés sur la semelle (3), au moins deux saillies (5) de deux crampons (1) étant orientées dans des directions différentes.

7. Procédé selon l'une quelconque des revendications 1 à 6, **caractérisé en ce que** lors du moulage par injection de la semelle (3) selon l'étape d) selon la revendication 1, une pluralité d'éléments d'ancrage (12) disposés au niveau du corps de base de crampon (4) sont surmoulés par le matériau de la semelle (3).

8. Procédé selon l'une quelconque des revendications 1 à 7, **caractérisé en ce que** la partie de fixation (6) est fabriquée en polyamide.

9. Procédé selon l'une quelconque des revendications 1 à 8, **caractérisé en ce que** le crampon (1) est fabriqué sous forme de pièce en plastique à deux composants.

10. Procédé selon l'une quelconque des revendications 1 à 9, **caractérisé en ce que** le crampon (1) se compose au moins en partie d'élastomère thermoplastique à base d'uréthane (TPU).
